# EUROPEAN PATENT APPLICATION

(11) **EP 1 722 325 A1**
(43) Date of publication of application: **15.11.2006**
(21) Application number: 06252477.2
(22) Date of filing: 11.05.2006
(51) Int. Cl.: G06Q 30/00

(54) **Survey system, survey program, and survey method**

(30) Priority: 11.05.2005 JP 2005138617
(71) Applicant: Kabushiki Kaisha G-mode, Tokyo (JP)
(72) Inventor: Miyaji, Takeshi, Shibuya-ku Tokyo (JP); Ishihara, Yoshihiko, Shibuya-ku Tokyo (JP)
(74) Representative: Butler, Michael John

(57) **Abstract**

Components of a survey contractor computer 1, a data server 2 under the management of the contractor computer 1, a respondent's personal digital assistant 3, and a survey client computer 4 are connected by wired, wireless, or infrared communications media, e.g., the Internet, or virtual private network. The personal digital assistant 3 is provided with a direction key 301 for cursor movement and data selection through key operation. A survey application 201 is storing survey question data 101, and reply option data 102 that is totally or partially associated with the direction key 301 of the personal digital assistant 3 on the direction basis. The survey application 201 is storing also a reply entry module 202 that determines the reply option selected by moving a cursor using the direction key 301 as the reply for the question. With such a structure, the survey can be conducted with the higher reply efficiency without imposing the burden on respondents both in timewise and moneywise.

## Description

The present invention relates to survey systems, survey programs, and survey methods for making surveys using personal digital assistants that are capable of data transmission and reception over a communications network.

Prior to development of new products and services, so-called "survey" has been made to derive data about general consumers' wants, preferences, and others. For such survey, paper medium such as survey paper has been popularly used to ask for consumers' reply. The problem with such survey in writing is that, however, replies are not always returned due to paper damage or loss. Instead of using survey paper, survey by telephone is also a possibility. However, such survey occupies the telephone for a long time, and thus often annoys the survey respondents, e.g., hinders the respondents from making or taking calls, or asks the respondents to answer no matter how they are busy.

Due to the dramatic increase of the number of Internet users by the widespread use of personal computers, survey asking I for reply in E-mail has become popular as an alternative to survey paper and telephone suffering the possibility of paper damage or loss. The problem with such survey by E-mail is the reply rate lower than expected. This is because, unless the survey inquiry grabs the respondents attention, it is unlikely that the respondents access the survey page even if they are requested for reply. In consideration thereof, another survey method has appeared, utilizing personal digital assistants, e.g., mobile phones, being on a pace to accomplish "a mobile phone for everyone". The survey method asks respondents to make replies whenever they feel like to do so, but the respondents often find it annoying to select, enter, and transmit their replies. What is more, it takes a long time to answer survey questions so that the communications fee is increased for the respondents to pay. Even with the survey method utilizing personal digital assistants as such, the reply rate remains low.

For solution, Patent Document 1 (JP-A-2003-85326) describes the developed technology of transmitting a questionnaire collection program to respondents mobile phones for automatic collection of replies. This technology seems to serve the purpose to some extent in terms of collection of replies. However, this is not the issue that needs to be solved for the respondents who pay the communications fee and make time to answer the questionnaire. The respondents are not yet freed from annoying feeling of answering the survey questions, and thus the results remain unsatisfactory.

Therefore, the invention is proposed with an object of realizing a survey that places no burden on respondents both in moneywise and timewise, thereby increasing the reply rate with efficiency for survey conductors.

More in detail, no matter what medium the survey uses asking for reply, e.g., paper medium or E-mail, the most crucial reason of having failed to derive the satisfactory reply rate is the fact that respondents find it annoying to fill in the survey paper or to access the WEB page of the survey. With mobile phones, the burden on the communications fee is added to the respondents' annoying feeling to make reply. In consideration thereof, the object of the invention is to provide a survey system, program, and method with which survey reply can be derived with considerable ease and certainty while solving such problems even using personal digital assistants.

As specific means for solving such problems, the invention proposes the following survey system, program, and method.

The first aspect of the invention is directed to a survey system for making a survey using a personal digital assistant that is capable of data transmission and reception over a communications network. The survey system includes: the personal digital assistant including a direction key provided for cursor movement and data selection through key operation; survey question data relating to the survey; reply option data that is totally or partially associated with the direction key of the personal digital assistant on the direction basis; a survey application storing the survey question data and the reply option data; and a data server for transmitting the survey application to the personal digital assistant. In the survey system, the survey application stores a reply entry module for determining a reply option selected by moving a cursor using the direction key as the reply for the question.

A second aspect of the invention is directed to a survey program for making a survey using a personal digital assistant that is capable of data transmission and reception over a communications network. The survey program so operates the personal digital assistant as to complete the reply-making procedure only by moving a cursor through key operation of a direction key, using: the personal digital assistant including the direction key provided for cursor movement and data selection through key operation; survey question data relating to the survey; reply option data that is totally or partially associated with the direction key of the personal digital assistant on the direction basis; a survey application storing the survey question data and the reply option data; and a data server for transmitting the survey application to the personal digital assistant. The survey application stores a reply entry module for determining a reply option selected by moving the cursor using the direction key as the reply for the question.

A third aspect of the invention is directed to a survey method for making a survey using a personal digital assistant capable of data transmission and reception over a communications network. The surveymethod uses: the personal digital assistant including a direction key provided for cursor movement and data selection through key operation; survey question data relating to the survey; reply option data that is totally or partially associated with the direction key of the personal digital assistant on the direction basis; a survey application storing the survey question data and the reply option data; and a data server for transmitting the survey application to the personal digital assistant. The survey application stores a reply entry module for determining a reply option selected by moving a cursor using the direction key as the reply for the question. The survey method includes the steps of: transmitting the survey application to the personal digital assistant from the data server; monitor-displaying, together with the survey question data, the reply option data that is totally or partially associated with the direction key of the personal digital assistant on the direction basis; and making a reply by moving the cursor through key operation of the direction key.

A fourth aspect of the invention is directed to the survey system of the first aspect, the survey program of the second aspect, and the survey method of the third aspect, and the survey question data, the reply option data, and the survey application are transmitted separately to the personal digital assistant from any one specific data server or any different data servers.

As such, the invention is directed to make survey using personal digital assistants, including any types of devices capable of data transmission and reception through network connection, e.g., mobile phones. For the invention, specifically, the devices are to be provided each with a direction key for cursor movement and data selection. The direction key is the one often called a cross key, and is found at the upper portion of a button key pad of a mobile phone. This is not restrictive, and as long as the key enables cursor movement and data selection with a single key touch, any type of key will do, e.g., stick-shaped type, or pressure-sensitive pad type.

Data of survey questions and replies is stored in a survey application. If the survey is conducted by a client himself or herself, the survey application is provided from a data server under his or her management. The survey is generally conducted by operators of Web sites with a large number of members or survey application designers in response to a client request. With this being the case, the survey application is provided from a data server under the management of such operators or designers. Herein, the survey application designers establish a correlation between the data of survey questions and replies to direction movement of the direction key.

For the purpose of achieving the object, the invention considers not only a case of transmitting a survey application together with data of survey questions and replies in storage but also a case of transmitting only a survey application in advance to a personal digital assistant. In such a case, the data of survey questions and replies is to be later forwarded to the personal digital assistant from the same or different data servers for storage into the survey application. With this being the case, alternatively, the Web site operators or survey application designers may first transmit a survey application in advance to a personal digital assistant, and then data of survey questions and replies. Here, the client may also transmit the data of survey questions and replies. It means that the data of survey questions and replies is not always provided from the same data server providing the survey application. In an extreme sense, an individual may possibly be a survey conductor who creates and provides data of survey questions and replies.

The problem-solving means of the invention serves most importantly as a reply entry module, determining a reply option selected through cursor movement of the direction key as the reply derived for the survey question. The reply option data is corresponding to the survey question data, and is totally or partially associated in advance with the direction key of the personal digital assistant on the direction basis. With such directional association established between the direction key and reply options, with the direction key in the shape of a cross, the number of reply options is four, each corresponding to one of the four directions of up, down, right, and left. Using the reply entry module of the invention, on the other hand, there requires only to move the cursor through operation of the direction key to enter the respondent's reply for the question, allowing to make a survey reply only with a single key touch.

The survey system, program, and method of the invention favorably enable to considerably reduce the annoyance of answering survey questions compared with conventional surveys asking for reply in writing or in personal computer E-mail, or using personal digital assistants. The specific reasons are as below.
1. Any desired reply option can be selected only by moving a cursor using a direction key thanks to the configuration that reply option data for survey questions is associated to the direction key on the direction basis.
2. The annoyance of selecting reply options can be eliminated, e.g., pushing an enter button after selection, or entering a new answer for the next survey question, thanks to the configuration allowing operation with a single key touch, i.e., the reply option selected by operating the direction key for cursor movement is promptly entered as the reply for the question.
3. The increase of communications fee can be prevented thanks to the configuration that, after the survey application is downloaded, the line is disconnected until every survey question is through.
4. The survey can be privately conducted thanks to the configuration allowing separate transmission of survey question data, reply option data, and a survey application. Therefore, companies and individuals become possible to create survey question data and reply option data for transmission to personal digital assistants.

Preferred embodiments of the present invention will now be described by way of example only and with reference to the accompanying drawings in which:
FIG. 1 is a schematic diagram showing a system of the invention;
FIG. 2 is a schematic diagram showing another system of the invention;
FIG. 3 is a schematic structure diagram of a survey application;
FIG. 4 is a flowchart showing the procedure of implementing the invention; and
FIG. 5 shows exemplary image display of a personal digital assistant at the time of survey.

### (Entire Structure)

Although the invention is applicable to various cases for implementation, the following two cases are considered most general. One is the case where a survey application carries therein in advance survey question data and reply option data, and personal digital assistants receive the survey application from a survey contractor. The other is the case where a survey application carries no survey question data nor reply option data. Personal digital assistants receive the survey application from the application designer or any specific Web site operator, but survey question data and reply option data from a client such as a company or an individual.

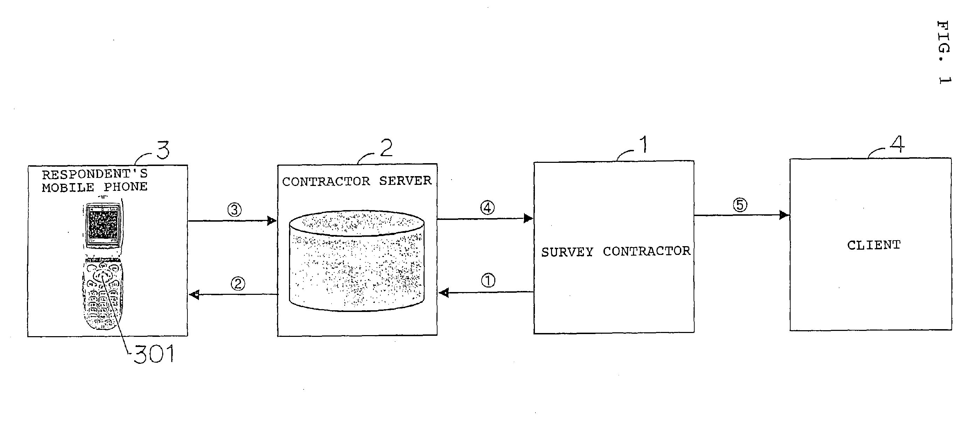

In the former case, i.e., thecasethatasurveyapplication carries therein in advance survey question data and reply option data, and personal digital assistants receive the survey application from a survey contractor, the system takes such a configuration as shown in FIG. 1, mainly including: a survey contractor computer 1; a data server 2 under the management of the contractor computer 1; a personal digital assistant 3 of a survey respondent; a survey client computer 4; a survey application 201; and a reply entry module 202 to be stored in the survey application 201. Here, the survey application 201 carries therein survey question data 101 and reply option data 102, which are stored in the data server 2. As an alternative configuration, the client computer 4 may be omitted due to the fact that it only receives data of collected replies and analysis results of replies, and has no direct relation to survey conduct. The connection is established between the components, i.e., between the conductor computer 1 and the data server 2, the data server 2 and the personal digital assistant 3, and the conductor computer 1 and the client computer 4, by wired, wireless, or infrared communications media, e.g., the Internet, virtual private network, IrDA, or Bluetooth.

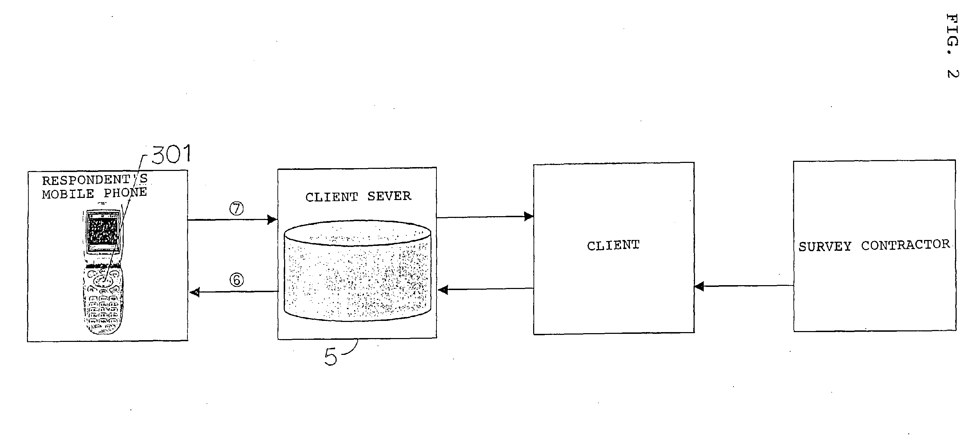

In the latter case, i.e., the case that a survey application carries no survey question data nor reply option data, and personal digital assistants receive the survey application from the application designer or any specific Web site operator but survey question data and reply option data from a client such as a company or an individual, the system takes the same configuration as the former case as shown in FIG. 2. In this case, however, the client computer 4 cannot be omitted due to its relation to the survey conduct, i.e., the survey question data 101 and the reply option data 102 are forwarded to the personal digital assistant 3 from the client computer 4 via its data server 5. That is, in this case, the data server 5 of the client computer 4 carries therein the survey question data 101 and the replay data 102 for transmission to the personal digital assistant 3. In this case, similar to the former case, the connection is established between the components by wired, wireless, or infrared communications media.

### (Personal Digital Assistant)

The invention essentially includes the personal digital terminal 3 provided with a direction key 301 for implementation. Most of recent mobile phones each carry a so-called "cross key", located on the upper portion of a button key pad to move a cursor in the vertical or lateral direction. The direction key is not restricted to the shape of across, andmaybeofa stick-shaped type or a pressure-sensitive pad type. Using the direction key in the shape of a cross, the cursor moves only in the four directions of up, down, right, and left, and accordingly the number of reply options will be four at the maximum as will be described later. By using the direction key of a stick-shaped type or a pressure-sensitive pad type, on the other hand, the cursor can be moved to the directions on a random basis so that the number of reply options will be four or more.

### (Survey Question Data)

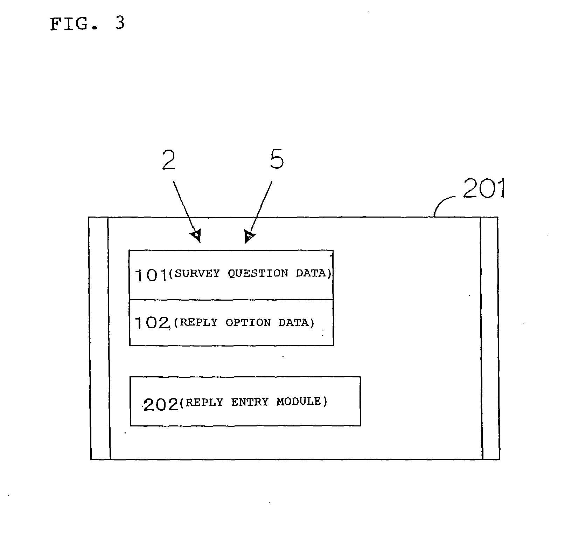

As shown in FIG. 3, the survey question data 101 of the invention is created together with the reply option data 102 in a corresponding manner, and is in the file format for storage into the survey application 201. The survey contractor may create the survey question data and the reply option data, and store the resulting data into the survey application 201 of his or her design. Alternatively, the company or individual client may create the survey question data and the reply option data, and store the resulting data into the survey application 201 of its design or designed by the survey contractor. In the former case, the resulting data is stored in the contractor computer 1 or its data server 2, and in the latter case, the data is stored in the data server 5 of the client computer 4.

### (Reply Option Data)

The reply option data 102 of the invention is so created as to be totally or partially associated with the direction key 301 of the personal digital assistant 3 on the direction basis. The reply option data 102 is in the file format similarly to the survey question data 101 for storage into the survey application 201. As described above, using the direction key in the shape of a cross, the cursor moves only in the four directions of up, down, right, and left, and accordingly the number of reply options will be four at the maximum. Using the direction key of a stick-shaped type or a pressure-sensitive pad type, on the other hand, the cursor can be moved to the directions on a random basis so that the number of reply options will be four or more. Similarly to the survey question data, when the survey application is transmitted by the survey contractor, the reply option data is stored in the contractor computer 1 or the data server 2. When the survey application is transmitted by a company or an individual, the reply option data is stored in the data server 5 of the client computer 4.

### (Survey Application)

As shown in FIG. 3, the survey application 201 of the invention takes the configuration that the survey question data and the reply option data can be stored in the file format. The survey application 201 stores the reply entry module 202 for determining a reply option selected through cursor movement of the direction key 301 of the personal digital assistant 3 as a reply derived for the survey question. Thereby, only by operating the direction key 301 of the personal digital ass istant 3 to move the cursor to any specific reply option, the reply-making procedure is regarded as completed, and the reply option having the cursor thereon is entered as an answer for the question. To be more specific, the data of closed-end replies that is totally or partially associated in advance with the direction key on the direction basis is correlated with the cursor movement of the direction key 301 of the personal digital assistant 3. The survey application 201 is assigned with the function of determining one reply option selected by moving the cursor as the reply for the survey question. Note that the survey application 201 is generally stored in the contractor computer 1 of the survey contractor having designed the survey application or the data server 2 for transmission to the personal digital assistants 3. In a case where the client is licensed from the application designer or has designed the survey application himself or herself, the survey application is stored in the client computer 4 or its data server 5, and transmitted therefrom to the personal digital assistants 3.

The invention is directed to a survey system, program, and method, and the survey system takes the configuration mainly as described above. Described now are the rough details of the survey program and method.

### (Survey Program)

Running the survey program of the invention uses: the personal digital assistant 3 including the direction key 301; the survey question data 101 and the reply option data 102; the survey application 201 storing the survey question data and the reply option data; and the data server 2 for transmitting the survey application 201 to the personal digital assistant 3. The survey application 201 is storing the reply entry module 202 for determining a reply option selected through cursor movement of the direction key 301 as the reply derived for the survey question, and is programmed to enable the reply-making procedure only by moving the cursor through key operation of the direction key 301. The invention thus enables prompt reply entry in response to cursor movement by the direction key 301. As an alternative function, the personal digital assistant 3 may receive all at once or separately the survey application 201, the survey question data 101, and the reply option data 102. As still alternative function, when the respondent is through with his or her reply making, the reply option data may be automatically forwarded to the data server 2.

### (Survey Method)

Executing the survey method of the invention uses the same system as described above, and the method goes through: a step of transmitting the survey application 201 from the data server 2 to the personal digital assistant 3; a step of monitor-displaying, together with the survey question data 101, the reply option data 102 that is totally or partially associated with the direction key 301 of the personal digital assistant 3 on the direction basis; and a step of making a reply by moving a cursor through key operation of the direction key 301. Assuming that transmission of the survey question data, the reply option data, and the survey application is made separately from any one specific data server or any different data servers, e.g., the data server 2 or/and 5, to the personal digital assistant 3, the steps thereof are to be respectively added.

### (Example)

Described next is an example of the invention. As described in the foregoing, the invention is applicable to various cases for implementation. As a case considered most general, referring to FIG. 1, considered now is the case where a company or individual client makes a survey request to a Web site operator or a survey application designer, and the data server 2 under the management of the survey contractor computer 1 forwards the survey application 201 previously storing the survey question data 101 and the reply option data 102 to the personal digital assistant 3. In this case, the survey question data, the reply option data, and the survey application are designed by the contractor computer 1, and are transmitted to the personal digital assistant 3 via the data server 2 that is under the management of the contractor computer 1.

As described in the foregoing, the system is under the environment that the components are connected together by wired, wireless, or infrared communications media, e.g., the Internet, virtual private network, IrDA, or Bluetooth. The components include: the contractor computer 1 belonging to a survey contractor; the data server 2 under the management of the contractor computer 1; the personal digital assistant 3 belonging to a respondent; and the client computer 4 belonging to a client who is the one asked for the survey. The personal digital assistant 3 is provided with the direction key 301, which is used to move a cursor and make selection of data through key operation. The survey application 201 to be transmitted from the data server 2 to the personal digital assistant 3 stores the survey question data 101 and the reply option data 102 that is totally or partially associated in advance with the direction key 301 of the personal digital assistant 3 on the direction basis. The survey application 201 is storing the reply entry module 202 for determining a reply option selected through cursor movement of the direction key 301 of the personal digital assistant 3 as the reply derived for the survey question.

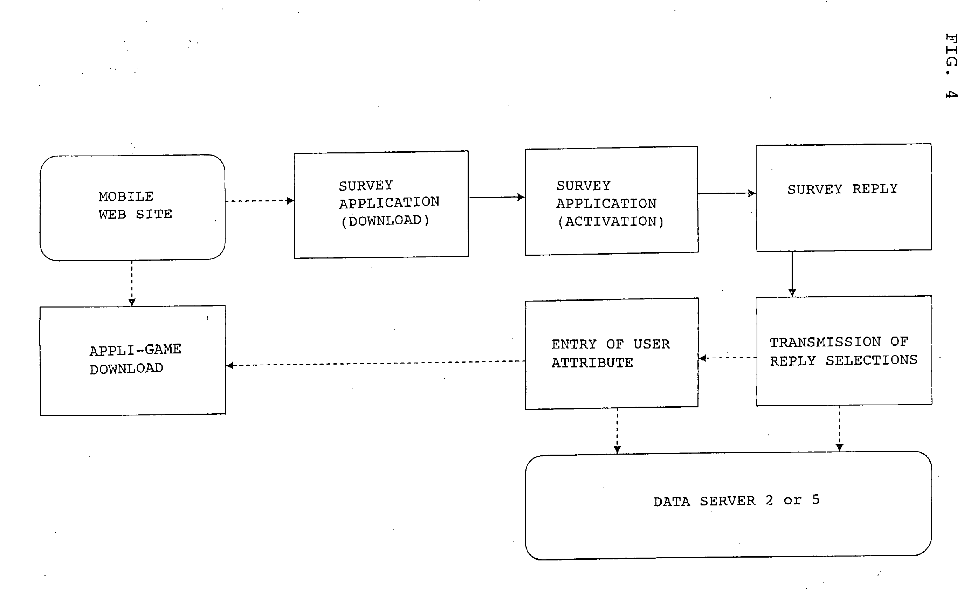

Referring now to FIG. 4, a person who is a survey respondent uses his or her personal digital assistant 3 to make an access to a survey site in the data server 2. Here, to make an access to the survey site, a portal site of a Web site operator providing contents of game or others may be first accessed, or the survey site may be directly accessed. Once the respondent accesses the survey site, the data server 2 asks him or her whether or not to make a survey reply. If Yes, the respondent indicates his or her intension. In actual embodiment, for the purpose of reducing the number of annoying operation steps, the personal digital assistant 3 displays on its monitor a download page for the survey application. Clicking an indication of download shows the respondent's intension for the survey reply. For the personal digital assistants such as mobile phones, accessing the Web sites always result in the communications fee, and thus moving to the download page after asking the respondent's intention increases the communications fee. In consideration thereof, it is considered critical to facilitate information selection and entry.

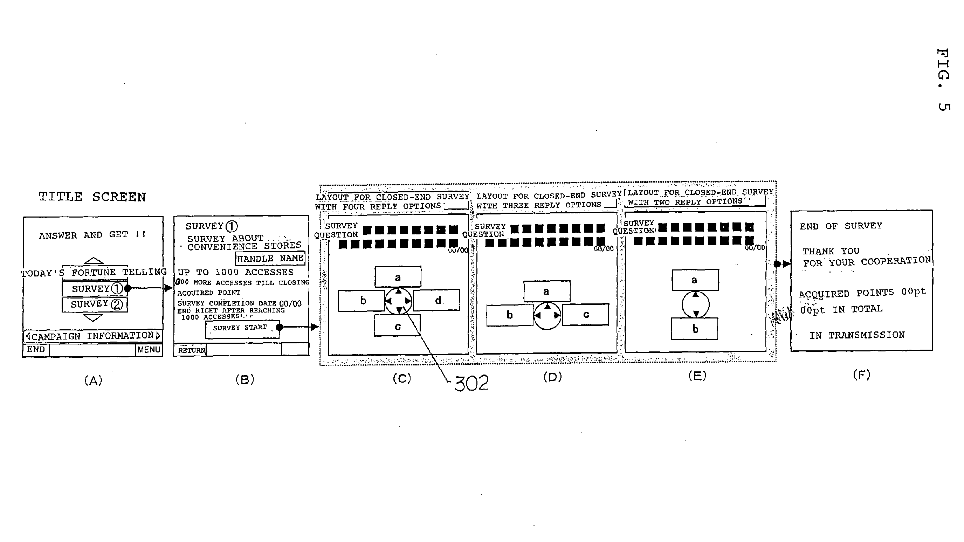

When the respondent determines to make a survey reply, he or she is required only to click the indication of download. In response, the survey application 201 is downloaded to the respondent's personal digital assistant 3 from the contractor computer 1 via the data server 2. The survey application 201 is then automatically activated. By referring to FIG. 1, the survey application 201 is transmitted to the personal digital assistant 3 in the direction of arrows "1" and "2". That is, on the display screen of the respondent's personal digital assistant 3, when the respondent access a Web site for a survey, displayed first is such a Web page as a screen (A) of FIG. 5. If the respondent wants to make a reply to a "survey 1", he or she clicks the corresponding indication. In response, the survey application 201 for the "survey 1" is automatically downloaded, and then a survey page of a screen (B) appears. When the respondent clicks an item of "start survey" in the screen (B), the survey application 201 is activated so that the survey question data 101 and the reply option data 102 are invoked from the corresponding file. A survey question and its corresponding reply options are thus displayed on the screen of the personal digital assistant 3. After the survey application 201 is downloaded, the connection with the data server 2 is cut off so that the communications fee is prevented from increasing.

On the monitor of the personal digital assistant 3, the questions and reply options are often displayed on a single screen at the same time not to complicate the reply-making procedure due to two screens of questions and reply options. The reply option data of the invention is totally or partially associated with the direction key 301 provided to the personal digital assistant 3 on the direction basis. With the function of the reply entry module 202 that will be described later, only by moving a cursor through operation of the direction key 301, the selected reply option is entered as the reply for the question. As a specific example, the direction key for general types of personal digital assistants such as mobile phones is often a so-called "cross key", and the cursor can be moved thereby to four directions of up, down, right, and left. This means that the number of reply options will be four at the maximum. For example, the personal digital assistance 3 displays on its monitor a screen (C) of FIG. 5 for a closed-end survey question of four answers, a screen (D) of FIG. 5 for a closed-end survey question of three answers, and a screen (E) of FIG. 5 for a closed-end survey question of four answers.

The screen (C) of FIG. 5 displays a key image 302, and four reply options of "a", "b", "c", and "d". The key image 302 serves equivalent to a cross key, i.e., the direction key 301 of the personal digital assistant 3. The four reply options are corresponding to the movement directions of the direction key 301, respectively. When the respondent wants to select the reply option of "a", he or she may operate the direction key 301 in accordance with the direction indicated by the key image 302 so that the selected reply option "a" is entered as the reply for the question. Even with a closed-end survey question of three or two answers, the key image 302 serving equivalent to the direction key 301 indicates the movement direction of the direction key 301 as shown in the screens of (D) and (E). The respondent accordingly operates the direction key 301 based thereon to select his or her reply.

For selection of reply options, with the function of the reply entry module 202 stored in the survey application 201, only by placing a cursor on any desired reply option through operation of the direction key 301, the selected reply option is entered as the reply for the question. As such, the invention enables reply entry with a single key touch with the interoperability between the reply option data 102 associated with the directions of the direction key 301 and the reply entry module 202 for determining the movement of the direction key 301 as the selection of the reply option. This considerably reduces respondents' burden for making survey replies. That is, with 30 survey questions, for example, the respondent is only required to operate the direction key 301 for 30 times before completing the reply-making procedure, whereby the reply-making operation can be finished in a short time.

Once every survey question is through, a screen (F) of FIG. 5 appears, and the reply selections are forwarded to the contractor computer 1 via the data server 2 with the function of the survey application 201. That is, as shown in FIG. 1, the reply selections for the survey are provided to the contractor computer 1 in the direction of arrows "3" and "4" . In the contractor computer 1, the reply selections are compiled together with those coming from other respondents, and the compiled result data is forwarded to the client computer 4 belonging to the client asked for the survey. That is, as shown in FIG. 1, the compiled result data derived by the contractor computer 1 is forwarded to the client computer 4 in the direction of an arrow "5" . Here, the compile result data for the client of the survey is provided surely by paper medium in addition to data transmission as above.

For transmission of the survey question data 101, the reply option data 102, and the survey application 201 to the respondent's personal digital assistant 3, as an alternative to transmission from the data server 2 under the management of the survey contractor computer 1 of the invention, transmission from the data server 5 under the management of the client computer 4 belonging to a company or an individual will do. With this being the case, as shown in FIG. 2, the survey application is transmitted in advance to the personal digital assistant 3 from the data sever under the management of the application designer or the Web site operator, and the survey question data and the reply option data later come from the data server 5 under the management of the client computer 4 . In a case where the client is licensed for running the survey application or is capable of application design, the survey application may be also forwarded to the respondent's personal digital assistant 3 from the data server 5 under the management of the client computer 4. In this case, as shown in FIG. 2, the transmission of the survey question data and the reply option data, and the survey application, or the survey application storing the survey question data and the reply data is made in the direction of an arrow "6", from the client' s data server 5 to the personal digital assistant 3. The reply selections are provided in the direction of an arrow "7", from the personal digital assistant 3 to the client's data server 5.

As such, described in the above example is only the case of transmitting the survey question data 101, the reply option data 102, or the survey application 201 storing the survey question data and the reply option data to the personal digital assistant 3 from the contractor computer 1 of the survey contractor via the data server 2 under its management. The survey application may or may not store in advance the survey question data and the reply option data, and such a survey application may or may not be provided from a single data server. The invention is directed to cover all of such cases.

As shown in FIG. 4, at the time of transmitting the survey reply selections to the data server 2, the respondent' s attribute information, e.g., sex or age, may be asked to be additionally entered. If this is the case, such additional information can help more detailed analysis of the survey result. So as to increase the survey attendance and the survey reply efficiency, the respondents may be offered an extra bonus as a game operable on the personal digital assistant, or points exchangeable for free gift or others.

The invention is directed to a survey system, program, and method utilizing personal digital assistants such as mobile phones. The invention enables selection of any desired reply option with a single key touch, whereby respondents find it not annoying to complete survey questions. What is more, the burden on the respondents can be considerably reduced both in moneywise and timewise, thereby increasing the survey reply rate with efficiency. As a result, no matter what business fields, prior to development of new products and services, it is possible to derive data about general consumers' wants, preferences, and others with high reliability.

## Claims

1. A data processing system for making a survey, the system comprising a personal digital assistant capable of data transmission and reception over a communications network,
wherein the personal digital assistant includes at least one direction key provided for cursor movement and data selection through key operation and the personal digital assistant is capable of displaying data; the data processing system further comprising:
survey question data relating to a survey;
reply option data that is totally or partially associated with a direction key of the personal digital assistant on a direction basis;
a survey application which stores the survey question data and the reply option data; and
a data server for transmitting the survey application to the personal digital assistant, wherein
the survey application includes a reply entry module for determining a reply option such that moving the cursor using a direction key constitutes the reply option being selected as a reply for a question.

2. A method for making a survey using a personal digital assistant capable of data transmission and reception over a communications network, the personal digital assistant including at least one direction key provided for cursor movement and data selection through key operation;
wherein the survey method comprises the steps of:
transmitting a survey application to the personal digital assistant from a data server; the survey application storing survey question data and reply option data;
displaying on the personal digital assistant, survey question data relating to the survey, together with reply option data that is totally or partially associated with a direction key of the personal digital assistant on a direction basis; and
making a reply to the question by moving the cursor through key operation of the direction key, wherein the survey application includes a reply entry module for determining the reply option, such that moving the cursor constitutes the reply option being selected.

3. A method of completing a survey using a personal digital assistant capable of data transmission and reception over a communications network, the personal digital assistant including at least one direction key provided for cursor movement and data selection through key operation, the method comprising:
receiving a survey application at the personal digital assistant;
receiving and storing survey question data and reply option data at the personal digital assistant;
viewing, on a display of the personal digital assistant, survey question data relating to the survey together with reply option data that is totally or partially associated with a direction key of the personal digital assistant on a direction basis;
selecting a reply option by moving the cursor through operation of the direction key;
wherein the survey application includes a reply entry module for determining the reply option such that moving the cursor constitutes the reply option selected.

4. A computer program product for use with a personal digital assistant capable of data transmission and reception over a communications network, and having at least one direction key provided for cursor movement and data selection, the computer program product containing instructions that when executed on the personal digital assistant, will configure the personal digital assistant to:
receive and store survey question data and reply option data at the personal digital assistant;
display survey question data relating to the survey together with reply option data that is totally or partially associated with a direction key of the personal digital assistant on a direction basis;
determine, using a reply entry module of the survey application, the reply option selected, wherein movement of the cursor through operation of the direction key constitutes the reply option being selected.

5. A data processing system according to claim 1, a method according to claim 2 or 3, or a computer program product according to claim 4, wherein the survey question data, the reply option data, and the survey application are transmitted separately to the personal digital assistant from any one specific data server or any different data servers.

6. A data processing system, method or computer program product as claimed in any preceding claim, wherein the reply option data includes at least two answers to the survey question, each answer corresponding to a different directional movement of the direction key.

7. A data processing system, method or computer program product as claimed in any preceding claim, wherein the personal digital assistant is disconnected from the communication network while the survey questions are being answered.

8. A data processing system, method or computer program product as claimed in any preceding claim, wherein the reply option data selected is transmitted to the data server once the questions have been answered.

9. A data processing system, method or computer program product as claimed in any preceding claim, wherein the survey question data and the associated reply option data are displayed to the respondent on a single display screen.

10. A survey program for making a survey using a personal digital assistant capable of data transmission and reception over a communications network, and operating the personal digital assistant to complete a reply-making procedure only by moving a cursor through key operation of a direction key using:
a personal digital assistant including a direction key provided for cursor movement and data selection through key operation;
survey question data relating to the survey;
reply option data that is totally or partially associated with the direction key of the personal digital assistant on a direction basis;
a survey application which stores the survey question data and the reply option data; and
a data server for transmitting the survey application to the personal digital assistant, wherein
the survey application includes a reply entry module for determining a reply option, the reply option being selected as a reply for a question by moving a cursor using the direction key.
